(19) Europäisches Patentamt / European Patent Office / Office européen des brevets

(11) **EP 4 660 592 A1**

(12) **EUROPEAN PATENT APPLICATION**

(43) Date of publication:
**10.12.2025 Bulletin 2025/50**

(21) Application number: **25180467.0**

(22) Date of filing: **03.06.2025**

(51) International Patent Classification (IPC):
**G01F 1/00** *(2022.01)* **F24F 11/74** *(2018.01)*
**F24F 110/30** *(2018.01)* **G01P 5/00** *(2006.01)*

(52) Cooperative Patent Classification (CPC):
**G01F 1/00; F24F 11/74;** F24F 2110/30; G01P 5/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.06.2024 FI 20245726**

(71) Applicant: **Produal Oy**
**48770 Kotka (FI)**

(72) Inventors:
• HYTÖNEN, Timo
48770 Kotka (FI)
• PELKONEN, Miika
48770 Kotka (FI)

(74) Representative: **Berggren Oy**
**P.O. Box 16**
**Fabianinkatu 21**
**00101 Helsinki (FI)**

(54) **A VOLUMETRIC AIR FLOW TRANSMITTER AND DETERMINATION METHOD**

(57) The invention relates to an electronic air velocity, temperature and volumetric air flow (AVT-flow) transmitter for determining a volumetric air flow inside an air duct, which transmitter comprises an air velocity sensor element, which is configured to measure air velocity, v, inside the air duct in a known immersion depth, y, that is shorter than the distance from an edge of the air duct to the center point of the circular cross-section of the air duct, and wherein a radius, R, of the air duct is known, and wherein in a case of measured air velocity, v, and a turbulent air flow, the volumetric air flow value, Q, inside the air duct is calculated using specific formula. The invention further relates to a method for determining a volumetric air flow inside an air duct by the transmitter.

Fig. 2

EP 4 660 592 A1

**Description**

Technical field

The present invention relates to an electronic air velocity, temperature and volumetric air flow transmitter, an AVT-flow transmitter, used for determining turbulent volumetric air flow based on a measured air velocity.
The invention also relates to a turbulent volumetric air flow determining method and a computer program product.

Background

In order for a HVAC system to work well and energy efficiently in incoming and exhaust air controlling, it requires a proper and accurately controlled demand based volumetric air flow. In a typical air duct system the air velocity varies between 0 to 20m/s and a volumetric air amount depends on the size of the building and it's requirements. Conditioned air passes through filters, ducts and vents. When the air flow is in order and works as desired, it can be expected high energy efficiency, low operating costs, long service life of components and right and desired temperatures in buildings. However, many buildings have airflow measurement issues that can make conditions uncomfortable and non-energy optimized, which may be a case, for example, in a building where air flows or temperatures are not in desired value in all rooms or spaces, in addition some spaces may have too high $CO_2$ value, while in other spaces there is energy loss due to too high ventilation, or on the other hand one room may feel cold and another warm.
In controlling a HVAC system of a building, an important thing is to determine an accurate volumetric air flow amount, especially in air ducts. Different conditions and structures of buildings may require different measurement means and methods. Every measuring means or method do not work as desired in all measuring environments or do not provide correct measuring readings for defining volumetric air flows correctly. Problems to measure the air flow can exist, for example, in cases of large ducts or with low air flow rates in the ducts.

Summary

Now there has been invented an improved method and technical equipment, implementing the method, by which the above problems are alleviated. Various aspects of the invention include an electronic air velocity, temperature and volumetric air flow transmitter, an AVT-flow transmitter for determining air flow properties such as air velocity, temperature and turbulent volumetric air flow determined based on an air velocity measured inside an air duct and to be used as a part of a Heating, Ventilation, and Air Conditioning (HVAC) system, a turbulent volumetric air flow determining method, and a computer readable medium comprising a computer program stored therein, which are characterized by what is stated in the independent claims. Various embodiments of the invention are disclosed in the dependent claims. The scope of protection sought for various embodiments of the invention is set out by the independent claims. The embodiments, examples, aspect and features, if any, described in this specification that do not fall under the scope of the independent claims are to be interpreted as examples useful for understanding various embodiments of the invention.
According to a first aspect, there is provided a electronic air velocity, temperature and volumetric air flow (AVT-flow) transmitter for determining a turbulent volumetric air flow inside an air duct, which the AVT-flow transmitter comprises an air velocity measuring sensor comprising at least one air velocity sensor element and a computing device, which the air velocity measuring sensor element is configured to measure air velocity, v, of an air flow inside the air duct in a known immersion depth, y, characterised in that the immersion depth, y, is shorter than the distance from an inner edge of the air duct to the center point of the circular cross-section of the air duct, and wherein a radius, R, of the air duct is known, and wherein the computing device is configured to calculate the volumetric air flow value, Q, inside the air duct with the following formula, if the air flow is turbulent:

$$Q \approx 0{,}817(\pi R^2)\left(\frac{y}{R}\right)^{-1/7} v,$$

wherein

v is the measured air velocity in the known immersion depth point,
n is a constant 7,
r is a velocity measuring distance from the center of the cross section of the air duct,
R is the radius of the air duct, and
y=R-r is a distance from the edge of the air duct, which corresponds the immersion depth of the air velocity sensor element.

According to an example, the immersion depth is mechanically limited by immersion limitation means. According to an example, the AVT-flow transmitter further comprises a data transmitting means configured to transmit the volumetric air flow value, Q.

According to a second aspect, there is provided a method for determining a turbulent volumetric air flow inside an air duct by an electronic air velocity, temperature and volumetric air flow (AVT-flow) transmitter. The method comprises obtaining a cross-section diameter of an air duct and a first immersion depth of a velocity sensor element of an air velocity measuring sensor, wherein the method further comprises:

measuring an air velocity value, v, from the first immersion depth by the velocity sensor element, and
determining the volumetric air flow value, Q, by the following formula, when the air velocity value is measured only from the first immersion depth and the air flow is turbulent:

$$Q \approx 0{,}817(\pi R^2)\left(\frac{y}{R}\right)^{-1/7} v$$

wherein
v is the measured air velocity in the known immersion depth point,
n is a constant 7,
r is a velocity measuring distance from the center of the cross section of the air duct,
R is the radius of the air duct, and
y=R-r is a distance from the edge of the air duct, which corresponds the immersion depth of the air velocity sensor element (205), which is shorter than the distance from the edge of the air duct to the center point of the circular cross-section of the air duct.

According to an example, the method further comprises
transmitting the volumetric air flow value, Q, to an external control system by a digital, analogy or wireless signal or using the volumetric air flow value, Q, to control a fan, a damper or a valve from the AVT-flow transmitter based on the built in a PID controller.

According to a third aspect, there is provided a computer program product comprising instructions which, when the program is executed by a computer, cause the computer to carry out the method for determining a volumetric air flow inside an air duct according to the second aspect and its example embodiment.

Brief description of the drawings

In the following, various embodiments of the invention will be described in more detail with reference to the appended figures, in which

Fig. 1a    shows an existing electronic air velocity, temperature and volumetric air flow (AVT-flow) transmitter and a cross-sectional view of a duct with an air flow,

Fig. 1b    shows as a graphic a part of turbulent air flow inside the duct according to an example power-law air velocity profile,

Fig. 2    shows an electronic air velocity, temperature and volumetric air flow (AVT-flow) transmitter of a HVAC system for determining a turbulent volumetric air flow inside an air duct according to an example, and

Fig. 3    shows a flow chart of a volumetric air flow measuring method of an AVT-flow transmitter of a HVAC system according to an example.

Detailed description

A heating, ventilation, and air conditioning (HVAC) system controls air temperature, air humidity, and air exchange, and purifies air in enclosed indoor spaces like buildings and houses. Its goal is to provide thermal comfort and acceptable indoor air quality. The HVAC system includes a heating equipment, a ventilation equipment, and a cooling or air-conditioning equipment. The HVAC system is an important part of, for example residential structures such as single family homes, apartment buildings, hotels, and senior living facilities and also medium to large industrial and office buildings and hospitals, where safe and healthy building conditions are regulated with respect to temperature, humidity and ventilation. The HVAC system controls heating, cooling and air-ventilation based on measured temperature readings of a room or other indoor space, air velocity readings of air ducts and/or volumetric air flow readings i.e. air volume readings of air ducts. Temperature, air velocity and volumetric air flow readings may be measured or determined by one or more suitable measuring devices, for example, by an AVT-flow transmitter i.e. Air Velocity, Temperature and volumetric air flow transmitter, designed for automatic HVAC systems. The AVT-flow transmitters measure air velocity and temperature and determine volumetric air flow readings, with field selectable range and output options in a single device. In other words, AVT-flow transmitters can be used for measuring air velocity, temperature and air volume in ventilation systems. Air volume is calculated from the air velocity and the duct diameters. The AVT-flow transmitters are designed with a duct mount probe i.e. a measuring sensor probe, and a possibly with adjustable duct flange suitable for round or rectangular ducts that restrict the mounting depth of the measuring sensor probe.

Thus, in order to control heating, cooling and/or air-ventilation correctly, a HVAC system needs in addition to room temperature readings volumetric air flow readings, which are determined based on air velocity measurement readings, which are measured, from air ducts. However, there are also methods for determining volumetric air flow readings, for example, a dynamic pressure difference measurement of an air flow with a pitot pipe or an averaging pitot pipe or a method in which the pressure difference produced by the ventilation machine is measured from the fan, and the air volume is calculated based on them.

As stated air velocity measurement readings of an air duct can be used for calculating volumetric air flows in the air duct. Accurate calculating of a volumetric air flow in air ducts is, however, not always possible without expensive air velocity measurement arrangements, especially in cases of large air ducts, because existing measuring means may not measure air velocity correctly or correctly enough for accurate volumetric air flow calculation/determination.

A general existing formula to calculate i.e. determine a volumetric air flow based on measured air velocity is the following: Volumetric air flow $[m^3/s]$ = 0,8 (a correction factor) x air velocity [m/s] x cross diameter $[m^2]$ of the air duct. The correction factor is determined from the air flow formulas and it is commonly used simplified factor, which gives correct volumetric air flow in specific circumstances. This above presented formula determines a volumetric air flow inside an air duct correctly, when the measurement point of the air velocity is in the center of the air duct, and the air flow profile is fully developed to a turbulent air flow.

Thus, the formula does not work in a case of a big air duct meaning a situation when it is not possible to locate an air velocity measurement point i.e. a velocity sensor element of an air velocity measuring sensor just to the center of the cross-section of the air duct.

It is assumed in that existing volumetric air flow calculation/determination method/formula that a velocity sensor element of an air velocity measuring sensor is always in the center point of the cross-section of an air duct. In other words, when the existing formula is used, it is assumed that the air velocity sensor element of the air velocity measuring sensor is reached in the center of the cross-section of the air duct. But situations when a velocity sensor element is not in the center of the cross-section of the air duct may cause erroneous air velocity readings for volumetric air flow determination i.e. used air velocity readings that are non-maximum air velocity readings from the air flow profile even if it is assumed in the volumetric air flow determination that they are, and thus erroneous volumetric air flow readings are obtained. The size of a deviation and/or a change of a deviation of a measured air velocity reading compared to the maximum air velocity reading from the air flow profile may depend on, for example, how the air flow reaches a velocity sensor element of an air velocity sensor i.e. how far from the center of the cross-section of the duct the velocity sensor element of the sensor is and/or air flow velocity and/or air flow profile shape of the air flow. The air flow velocity and its measuring points may affect the calculated volumetric air flow readings, even markable. This is because the correction factor is defined when air flow measuring sensor is measuring air velocity in the center of the cross-section of the air duct, where the turbulent air flow profile shape reaches its peak (maximum) air velocity value. Therefore, generally used air velocity measurements for determining volumetric air flow may be valid only in narrow conditions and the accuracy may get lower in changing in bigger ducts. In those situations, a probability and a size of an error of a determined volumetric air flow readings increases, when the existing volumetric air flow calculation/determination method/formulation is used.

Therefore there is a need for an air velocity measurement system and method that measures air velocity when the air duct is big and the center measurement position i.e. the center point of the cross-section of the air duct cannot be reached by a velocity sensor element of an air velocity measuring sensor due to the long distance to the center from the edge of the duct, so that a volumetric air flow could be calculated/determined correctly on the basis of the air velocity measured in every air flow circumstances and in all sized ducts. This is because, the other existing volumetric air velocity measurement methods like the systems based on, for example the dynamic pressure require more expensive test probes and in addition they make the field installation more difficult especially with large ducts. Typically the other existing methods require the probe to be installed through the air duct from an edge to an edge.

This more accurate volumetric air flow determination method and system in all sized ducts can be achieved by the following volumetric air flow determination method and system and in the following circumstances: a diameter of an air duct in which air velocity is going to be measured is known. The air velocity is measured by a velocity sensor element from an immersion depth inside the duct which immersion depth is known. The immersion depth can be any depth along the radius of the duct from the edge of the duct, it does not need to be a center of the cross-section of the air duct.

This concept and calculation principle can be used, for example, by an air velocity transmitter, for example, by an AVT-flow transmitter used in HVAC systems. An air duct diameter may be given as a parameter via a user interface (UI) of the AVT-flow transmitter or via UI of the HVAC or by any other means. An immersion depth i.e. a measurement depth of a velocity sensor element may be either a given parameter(s) (via UI of AVT-flow transmitter) or a predetermined fixed factor(s), value(s), for example, in a case when the immersion depth is mechanically limited by mechanical limitation means and it is a known fixed value(s). Mechanical immersion limitation means may be any means limiting the immersion depth of a velocity sensor element when it is inserted to an air duct through an opening in the edge i.e. on the surface of the air duct, for example a plate remaining outside the duct, a flange, a thicker part in the air velocity measuring sensor or any other suitable means preventing the velocity sensor element from getting deeper inner the air duct. The air duct itself may be cylindrical in the longitudinal direction and its cross-section is circular. However, the cross-section of the air duct may also be rectangular. The direction of the cross-section is perpendicular to the longitudinal direction of the air duct.

As mentioned above, the invented method can be used both for cylindrical and rectangular air ducts in cross-section. Examples below are for cylindrical ducts.

A volumetric air flow measuring method for turbulent air flow

An example, of a volumetric air flow measuring/calculation method for turbulent air flow is described below. This method may also be referred to as a one-point (1-point) volumetric air flow measuring/calculation method for turbulent air flow. The volumetric air flow measuring method is performed by a one-point electronic air velocity, temperature and volumetric air flow (AVT-flow) transmitter of a HVAC system. The term one-point means that there is only one measuring point/sensor in an air duct for measuring air velocity, v, of the turbulent air flow inside the air duct. However, instead of defining the method as a volumetric air flow measuring/calculation method, it may as well to be defined as a turbulent volumetric air flow determination method, because in addition of using the method for the air flow measuring/determining, it may be used for liquid flow measuring/determining. For determining an accurate turbulent volumetric air flow according to this example, firstly, it is known that the volumetric air flow is turbulent inside the air duct, it is determined beforehand, secondly it is known, one air velocity measurement value from a known immersion depth of a velocity sensor element of an air velocity measuring sensor is measured. Thirdly, the diameter of the air duct is known.

It is also assumed that the air flow profile exists according to power-law velocity profile, which approximates velocity profile when the flow is turbulent and it is assumed that the value of factor n = 7 generally approximates air flows in practice, in circumstances of the turbulent air flow.

Then, thirdly, the volumetric air flow calculation with the air velocity determination/calculation/measuring method can be performed using the following formulations of the volumetric air flow value, Q, formulas:

A relation between r and v can be written in the following form:

$$r(v) = R\left[1 - \left(\frac{v}{v_{max}}\right)^n\right]$$

The volumetric flow rate Q in a duct with circular cross-section can be calculated as follows:

$$Q = \int_0^{v_{max}} \pi\, r(v)^2\, dv = \frac{2n^2}{2n^2 + 3n + 1}\pi R^2 v_{max}.$$

The maximum velocity $v_{max}$ can be calculated with

$$v_{max} = \left(\frac{y}{R}\right)^{-1/n} v,$$

and thus the final formula for the volumetric air flow rate can be written as

$$Q = C(n, y, R)v,$$

where the constant C is determined by the constants n, y and R as follows:

$$C(n, y, R) = \left( \frac{2n^2}{2n^2 + 3n + 1} \right) (\pi R^2) \left( \frac{y}{R} \right)^{-1/n} v.$$

With n = 7 (of the turbulent air flow) volumetric air flow is calculated with the following formula

$$Q \approx 0{,}817 (\pi R^2) \left( \frac{y}{R} \right)^{-1/7} v.$$

v         is velocity of the measured air velocity in known immersion depth point of the velocity sensor element,
v_max    is the maximum velocity of the air flow,
r         is a measured distance from the center of the cross-section of the duct,
R         is the radius of the air duct, and
y=R-r    is a distance from the edge of the air duct, which corresponds immersion depth of the velocity sensor element, and
n         is a fixed factor 7.

The AVT-flow transmitter or HVAC system, if it has or receives/obtains all necessary information, provides an output, which comprises an accurate volumetric air flow value. A Proportional-Integral-Derivative (PID) controller of the AVT-flow transmitter directly and/or HVAC system may then control the volumetric air flow according to the setpoint based on this calculated accurate volumetric air flow information given by the AVT-flow method.

It should also be noted that this volumetric air flow value calculation method can be instead or additionally be performed by any external computing means, for example, by a server, or a cloud server, if the AVT-flow and/or HVAC has transmitted all necessary information to the external computing means or to the cloud service provider or it is some other way provided for them. The external computing means may then adjust settings of the HVAC based on the calculated volumetric air flow information, if needed, or transmit the calculated volumetric air flow information to the HVAC so that the HVAC can control its setting based on it, if needed.

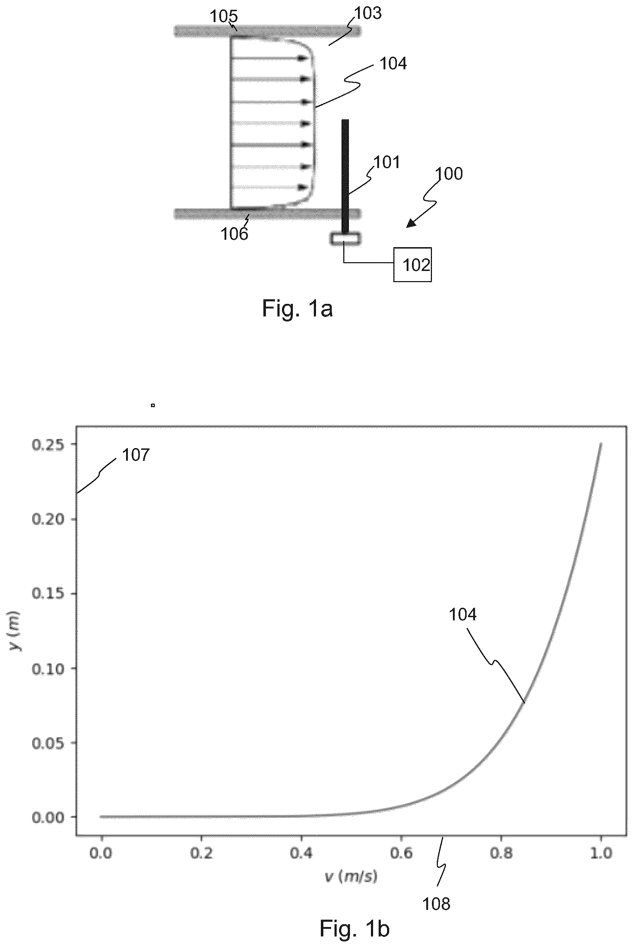

Fig. 1a shows an existing electronic air velocity, temperature and volumetric air flow (AVT-flow) transmitter 100 and a cross-sectional view of a duct 103 with an air flow 104. The AVT-flow transmitter 100 comprises an air velocity measuring sensor 101 comprising a velocity sensor element (not shown) and a computing device 102 configured to process received data i.e. at least air velocity data of the air velocity measuring sensor 101.

This AVT-flow transmitter 100 measures air velocity correctly only in the center of the duct 103 i.e. the velocity sensor element of the air velocity measuring sensor 101 is arranged inside the duct 103 in a position, wherein it is in the center of the cross-section of the duct 103 so that the immersion depth i.e. the measuring place is as far from a first edge 105 of the duct 103 and from the second edge 106 of the duct 103. The air flow 104 inside the duct 103 is turbulent as it should be for receiving correct air velocity readings. Thus, when the velocity sensor element of the air velocity measuring sensor 101 is in the center of the duct 103 and the air flow 104 is turbulent, as they are in this example, the volumetric air flow would be determined correctly by the existing formula, the measured air velocity, and a common factor 0,8, but if the velocity sensor element of the air velocity measuring sensor 101 is not in the center of the duct 103 or the air flow 104 is not turbulent, then the volumetric air flow would be determined incorrectly by the existing formula, the measured air velocity, and the common factor 0,8, because the measurement was not performed in the center of the cross-section of the duct 103 or the flow profile differs from turbulent, and thus a different sized common factor should have been used.

The AVT-flow transmitter 100 further comprises temperature measuring means and may further comprise, for example, means for transmitting measurement data to a HVAC or external computing means i.e. a data transmitting means, for example, a wired or wireless data transmitter, and/or a display.

Figure 1b shows as a graphic a part of the turbulent air flow according to power-law velocity profile 104 inside the duct 103 of figure 1a. In the y-axis 107 there is a distance (meters) from the second edge 106 of the duct 103 and in the x-axis 108 there is air flow velocity measurement readings as meters per second (m/s).

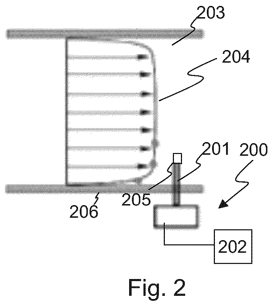

Figure 2 shows an electronic air velocity, temperature and volumetric air flow (AVT-flow) transmitter 200 suitable to be used even in a big duct for determining turbulent volumetric air flow, and a cross-sectional view of an air duct 203 with a turbulent air flow 204. The AVT-flow transmitter 200 comprises one air velocity measuring sensor 201 comprising a velocity sensor element 205 and a computing device 202 configured to process received data i.e. at least air velocity data provided by and received from the air velocity measuring sensor 201.

The velocity sensor element 205 of the air velocity measuring sensor 201 is arranged inside the duct 203 in a known position so that the immersion depth i.e. the measuring distance from an edge 206 i.e. the inner edge surface of the duct 203 is known. The diameter of the duct 203 is also known.

The AVT-flow transmitter 200 further comprises temperature measuring means, for example a temperature sensor, and may further comprises means for transmitting measurement data to a HVAC or to external computing means i.e. a data transmitting means, for example, a wired or wireless data transmitter, a display and/or any other means that the AVT-flow transmitter 200 may need.

Using the volumetric air flow value, Q, determination/calculation method, the volumetric air flow value, Q, can be determined/calculated correctly, when the AVT-flow transmitter 200 determines air velocity inside the duct 203, even when the immersion depth of the velocity sensor element 205 of the air velocity measuring sensor 201 is not in the center of the cross-section of the duct 203 i.e. the immersion depth can be any depth inside the air duct 203.

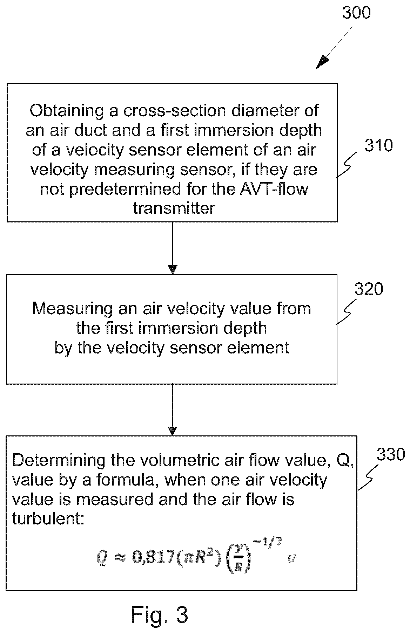

Figure 3 shows a flow chart of a turbulent volumetric air flow measuring i.e. determining method 300 of an AVT-flow transmitter of a HVAC system according to an example. In step 310, a cross-section diameter of an air duct and a first immersion depth of a velocity sensor element of an air velocity measuring sensor is obtained, for example received via a UI., if they are not predetermined for the AVT-flow transmitter. The immersion depth can alternatively be constant. In step 320, an air velocity value from the first immersion depth by the velocity sensor element is measured. And in step 330, the volumetric air flow value, Q, is determined by the formula, if only one air velocity value is measured and the air flow is turbulent:

$$Q \approx 0,817(\pi R^2)\left(\frac{y}{R}\right)^{-1/7} v$$

The methods 300 may further comprise the following step: transmitting the volumetric air flow value, Q, to an external control system by a digital, analogy or wireless signal or using the volumetric air flow value, Q, to control a fan, a damper or a valve from the AVT-flow transmitter based on the built in a PID controller.

A computer program product comprising instructions which, when the program is executed by a computer, cause the computer to carry out a method for determining a turbulent volumetric air flow inside an air duct. The method for determining the turbulent volumetric air flow inside the air duct by an electronic air velocity, temperature and volumetric air flow (AVT-flow) transmitter comprises at least: obtaining a cross-section diameter of an air duct and a first immersion depth of a velocity sensor element of an air velocity measuring sensor, measuring an air velocity value, v, from the first immersion depth by the velocity sensor element, and determining the volumetric air flow value, Q, by the following formula, when the air velocity value is measured only from the first immersion depth and the air flow is turbulent:

$$Q \approx 0,817(\pi R^2)\left(\frac{y}{R}\right)^{-1/7} v$$

wherein

v is the measured air velocity in the known immersion depth point,
n is a constant 7,
r is a velocity measuring distance from the center of the cross section of the air duct,
R is the radius of the air duct, and
y=R-r is a distance from the edge of the air duct, which corresponds the immersion depth of the air velocity sensor element (205), which is shorter than the distance from the edge of the air duct to the center point of the circular cross-section of the air duct. The method may further comprise transmitting the volumetric air flow value, Q, to an external control system by a digital, analogy or wireless signal or using the volumetric air flow value, Q, to control a fan, a damper or a valve from the AVT-flow transmitter based on the built in a PID controller. The determining may be performed by an internal microcontroller of an AVT-flow device. The AVT-flow device then transmits the pre-calculated Q data.

The various example embodiments of the invention can be implemented with the help of computer program code that resides in a memory of a computing device and causes the relevant device to carry out the invention. For example, an AVT-flow transmitter of a HVAC device/system or a HVAC device/system may comprise circuitry and electronics for handling, receiving, and transmitting data, a computer program code in a memory, and a processor that, when running the computer program code, causes the AVT-flow transmitter of HVAC device/system to carry out the features of an example embodiment i.e. determining volumetric air flow amount. Also external computing devices, instead of a computing device of the AVT-flow transmitter of the HVAC device/system or the HVAC device/system may be used for the same i.e. determining a volumetric air flow correctly.

It will be obvious that the present invention is not limited solely to the above-presented embodiments, but it can be modified within the scope of the appended claims.

**Claims**

1. An electronic air velocity, temperature and volumetric air flow (AVT-flow) transmitter (200) for determining a turbulent volumetric air flow inside an air duct, which the AVT-flow transmitter (200) comprises an air velocity measuring sensor (201) comprising air velocity sensor element (205) and a computing device (202), which the air velocity measuring sensor element (205) is configured to measure air velocity, v, of an air flow inside the air duct in a known immersion depth, y, **characterised in that** the immersion depth, y, is shorter than the distance from an inner edge of the air duct to the center point of the circular cross-section of the air duct, and wherein a radius, R, of the air duct is known, and wherein the computing device (202) is configured to calculate the volumetric air flow value, Q, inside the air duct with the following formula, if the air flow is turbulent:

$$Q \approx 0{,}817(\pi R^2)\left(\frac{y}{R}\right)^{-1/7}v$$

wherein

    v is the measured air velocity in the known immersion depth point,
    n is a constant 7,
    r is a velocity measuring distance from the center of the cross section of the air duct,
    R is the radius of the air duct, and
    y=R-r is a distance from the edge of the air duct, which corresponds the immersion depth of the air velocity sensor element (205).

2. An electronic air velocity, temperature and volumetric air flow (AVT-flow) transmitter (200) according to claim 1, wherein the immersion depth is mechanically limited by immersion limitation means.

3. An electronic air velocity, temperature and volumetric air flow (AVT-flow) transmitter (200) according to claim 1 or 2, wherein the AVT-flow transmitter (200) further comprises a data transmitting means configured to transmit the volumetric air flow value, Q.

4. A method for determining a turbulent volumetric air flow inside an air duct by an electronic air velocity, temperature and volumetric air flow (AVT-flow) transmitter, the method comprises:
   obtaining a cross-section diameter of an air duct and immersion depth of a velocity sensor element of an air velocity measuring sensor, **characterised in that** the method further comprises:

    measuring an air velocity value, v, from the immersion depth by the velocity sensor element, and
    determining the volumetric air flow value, Q, by the following formula, when the air velocity value is measured from the immersion depth and the air flow is turbulent:

$$Q \approx 0{,}817(\pi R^2)\left(\frac{y}{R}\right)^{-1/7}v$$

    wherein
    v is the measured air velocity in the known immersion depth point,
    n is a constant 7,
    r is a velocity measuring distance from the center of the cross section of the air duct,
    R is the radius of the air duct, and
    y=R-r is a distance from the edge of the air duct, which corresponds the immersion depth of the air velocity sensor element (205), which is shorter than the distance from the edge of the air duct to the center point of the circular cross-section of the air duct.

5. A method according to claim 4, wherein the method further comprises transmitting the volumetric air flow value, Q, to an external control system by a digital, analogy or wireless signal or using the volumetric air flow value, Q, to control a fan, a damper or a valve from the AVT-flow transmitter based on the built in a PID controller.

6. A computer program product comprising instructions which, when the program is executed by a computer, cause the computer to carry out the method for determining a volumetric air flow inside an air duct according to claim 4 or 5.

Fig. 1a

Fig. 1b

Fig. 2

300

Obtaining a cross-section diameter of
an air duct and a first immersion depth
of a velocity sensor element of an air
velocity measuring sensor, if they are
not predetermined for the AVT-flow
transmitter

310

Measuring an air velocity value from
the first immersion depth
by the velocity sensor element

320

Determining the volumetric air flow value, Q,
value by a formula, when one air velocity
value is measured and the air flow is
turbulent:

$$Q \approx 0{,}817(\pi R^2)\left(\frac{y}{R}\right)^{-1/7} v$$

330

Fig. 3

Europäisches
Patentamt

European
Patent Office

Office européen
des brevets

# EUROPEAN SEARCH REPORT

**Application Number**

EP 25 18 0467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Air flow and velocity transmitter AVT-series - Installation instructions", HK Instruments, 1 January 2022 (2022-01-01), pages 1-4, XP093289253, Retrieved from the Internet: URL:https://hkinstruments.fi/wp-content/uploads/2017/08/AVT-Series_Manual-7.0.pdf * pages 1-3; figures 1b, 1d * & Anonymous: "AVT - Air velocity transmitter", , 23 January 2024 (2024-01-23), XP093320327, Retrieved from the Internet: URL:https://produal-pim.rockon.io/rockon/api/v1/int/extmedia/openFile/01TGWJBKHG5Z5UWK5R7ZDI3TK72UREC7RG ----- | 1-6 | INV. G01F1/00 F24F11/74 ADD. F24F110/30 G01P5/00 |
| A | PESZYNSKI KAZIMIERZ ET AL: "Algebraic model of turbulent flow in ducts of rectangular cross-section with rounded corners", FLOW MEASUREMENT AND INSTRUMENTATION, BUTTERWORTH-HEINEMANN, OXFORD, GB, vol. 75, 28 August 2020 (2020-08-28), XP086260695, ISSN: 0955-5986, DOI: 10.1016/J.FLOWMEASINST.2020.101790 [retrieved on 2020-08-28] * Equations (1) - (4); pages 1-8 * ----- -/-- | 1-6 | TECHNICAL FIELDS SEARCHED (IPC) G01F G01P F24F |

The present search report has been drawn up for all claims

| Place of search | Date of completion of the search | Examiner |
|---|---|---|
| The Hague | 30 September 2025 | Myrillas, K |

EPO FORM 1503 03.82 (P04C01)

Europäisches
Patentamt

European
Patent Office

Office européen
des brevets

# EUROPEAN SEARCH REPORT

Application Number

EP 25 18 0467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PESARINI A J ET AL: "Theoretical analysis related to aspects of the pitot probe methodology in flow rate determination for blowers performance tests", FLOW MEASUREMENT AND INSTRUMENTATION, BUTTERWORTH-HEINEMANN, OXFORD, GB, vol. 12, no. 5-6, 1 January 2002 (2002-01-01), pages 373-377, XP027368878, ISSN: 0955-5986 [retrieved on 2002-01-01] * pages 373-377; figures 2-4, 7; table 4 * | 1-6 | |
| A | "Chapter 8: Internal flow ED - Yunus A Cengel; John M Cimbala", 1 January 2014 (2014-01-01), FLUID MECHANICS FUNDAMENTALS AND APPLICATIONS - THIRD EDITION, MC GRAW HILL EDUCATION, NEW YORK, USA, PAGE(S) 347 - 436, XP009562342, ISBN: 978-0-07-338032-2 * Chapter 8; Section 8-5; page 366; pages 361-374 * | 1-6 | |

TECHNICAL FIELDS
SEARCHED (IPC)

The present search report has been drawn up for all claims

| Place of search | Date of completion of the search | Examiner |
|---|---|---|
| The Hague | 30 September 2025 | Myrillas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)